# EUROPEAN PATENT SPECIFICATION

(11) **EP 0 324 230 B1**
(45) Date of publication and mention of the grant of the patent: **10.03.1993**
(21) Application number: 88310325.1
(22) Date of filing: 02.11.1988
(51) Int. Cl.: B62D 3/12

(54) **A rack and pinion steering gear**
Zahnstangenlenkung
Une direction à crémaillère

(30) Priority: 12.01.1988 GB 8800612
(43) Date of publication of application: 19.07.1989
(73) Proprietor: TRW CAM GEARS LIMITED, Clevedon Avon BS21 6NJ (GB)
(72) Inventor: Whitney, John, Abernant Aberdare Mid Glamorgan (GB)
(74) Representative: Walters, Frederick James

(56) References cited:
- GB-A- 1 383 517
- US-A- 4 593 578

## Description

### TECHNICAL FIELD & BACKGROUND ART

The present invention relates to a rack and pinion steering gear and is particularly concerned with a method of, and apparatus for, manufacturing such a gear.

Rack and pinion steering gears are well known as comprising a pinion which is rotatably mounted in a housing with its teeth in engagement with teeth of a rack bar so that rotation of the pinion in response to a steering manoeuvre effects in longitudinal displacement of the rack bar in the housing to provide a steering output. Conventionally, a yoke such as a saddle is mounted in the housing and spring loaded or otherwise biased into engagement with the rack bar of the side thereof remote from the position of engagement of the rack and pinion teeth to urge the rack bar into engagement with the pinion teeth. During assembly of such a gear a predetermined spring load is applied to the yoke to provide required frictional and biasing characteristics on the rack bar. Although the steering gear as manufactured and presented for installation in a vehicle may satisfy the specification required for that gear by a vehicle manufacturer, it may be found that during initial use of the gear in a vehicle, the biasing force on the rack bar to urge its teeth into engagement with the pinion is not maintained within a required tolerance due to wear in the gear components. As a result there may be a slight but nevertheless perceptible change in the steering feel and/or the gear may tend to become noisy so that some adjustment in the aforementioned biasing force on the rack bar may become necessary sooner than that which would be considered acceptable. It is an object of the present invention to provide a method of, and apparatus for, manufacturing a rack and pinion steering gear by which the aforementioned disadvantages can be alleviated so that any adjustment which may prove necessary in the biasing force on the rack bar due to wear in the components may be deferred until the gear has had considerable use in the vehicle, possibly to the extent that such adjustment proves unnecessary throughout the useful life of the steering gear.

### STATEMENT OF INVENTION & ADVANTAGES

According to the present invention there is provided a method of manufacturing a rack and pinion steering gear which comprises rotatably mounting a pinion in a housing with teeth of the pinion in engagement with teeth of the rack bar so that rotation of the pinion effects in longitudinal displacement of the rack bar in the housing; locating in the housing yoke means which is to be biased into engagement with the rack bar on the side thereof remote from the position of engagement of the rack and pinion teeth; temporarily introducing to the yoke means thrust means which reacts on the yoke means to urge the yoke means into engagement with the rack bar and thereby the rack bar teeth into engagement with the pinion teeth; applying to the yoke means by the thrust means a running-in biasing force greater than a practical biasing force required on the yoke means during use of the gear in a vehicle; reciprocating the rack bar longitudinally in the housing while the said biasing force is applied from the thrust means to run-in a seating between the yoke means and the rack bar; removing the thrust means from the yoke means and providing a biasing means in the gear which reacts on the yoke means and applies thereto the practical biasing force.

Further according to the present invention there is provided an apparatus for manufacturing a rack and pinion steering gear in which a pinion is rotatably mounted in a housing with teeth of the pinion in engagement with teeth of a rack bar so that rotation of the pinion effects in longitudinal displacement of the rack bar in the housing and yoke means located in the housing in sliding engagement with the rack bar on the side of the rack bar remote from the position of engagement of the rack and pinion teeth and which yoke means is to be urged into engagement with the rack bar with a practical biasing force in the manufactured gear, said apparatus comprising first support means for holding the housing; thrust means for temporary introduction to the yoke means and second support means for the thrust means, said thrust means being actuable to apply temporarily to the yoke means a running-in biasing force which is greater than said practical biasing force and reacts on the yoke means to urge the yoke means into engagement with the rack bar and thereby the rack bar teeth into engagement with the pinion teeth, and means for longitudinally reciprocating the rack bar in the housing simultaneously with the application of said running-in biasing force to run-in a seating between the yoke means and the rack bar.

Still further according to the present invention there is provided a rack and pinion steering gear manufactured by the method of the present invention.

By the method of the present invention a biasing force is temporarily applied by the thrust means to urge the yoke means into engagement with the rack bar during assembly of the gear. This temporary biasing force can be considerably greater than the practical biasing force which is subsequently to be applied to the yoke means and which is intended for normal use of the gear in a vehicle. When the rack bar is longitudinally reciprocated (for example by rotation of the pinion in the production assembly line of the gear) while the large temporary biasing force is applied, the yoke means can rapidly be worn or run-in to the rack bar surface with which it engages to form a relatively smooth and firm seating between the yoke means and the rack bar. This seating will extend over a required length of the rack bar, for example that which will correspond to its displacement from one full lock to the other in a steering manoeuvre. As a result of this running-in of the seating between the yoke means and the rack bar during manufacture of the gear, it will be apparent that when the biasing means (which typically comprises a spring component) is applied to the yoke means and set-up in the housing to provide the practical biasing force, the running-in of the seating between the yoke means and the rack bar during use of the gear in a vehicle is alleviated (and thereby the development of noise or changes in steering characteristics which can result from such running-in are alleviated).

The thrust means conveniently comprises a fluid pressure operated ram or a jack device driven by an electric motor. The thrust means will conveniently have a spigot part which is inserted into the housing to engage the yoke means and apply the desired running-in biasing force. Usually the housing will have an internal or external screw thread by which it is intended that the biasing means (which provides the practical biasing force for the yoke means in use) will be mounted and retained in the housing. If required the thrust means can have a complementary screw thread which engages with the aforementioned screw thread on the housing (or an alternative form of coupling between the thrust means and the housing) so that the reaction of the load from the running-in biasing force on the yoke means is taken through the thrust means on to the housing. Usually however the housing will be held firmly by a support in the assembly line and the thrust means will merely move into temporary engagement with yoke means to apply the required running-in biasing force so that the latter reacts between a support for the thrust means and the support for the housing. The present invention is primarily concerned with the manufacture of manual rack and pinion steering gears where changes in the feel of that gear may be particularly noticeable to the user of the gear. Although the invention can be applied to the manufacture of power assisted rack and pinion steering gears it is likely to be of less significance since the power assistance tends to mask changes in feel of the gear which may result from the yoke means running-in to the rack bar during use of the gear in a vehicle.

The present invention is applicable to rack bars of all cross sectional, shapes and forms such as substantially cylindrical, "V" section, "T" section and the like as are known in the art and the corresponding shapes and forms of the yoke means as are known in the art for such rack bars.

### DRAWINGS

One embodiment of a rack and pinion steering gear manufactured by the method of the present invention will now be described, by way of example only, with reference to the accompanying illustrative drawings, in which:-
Figure 1 diagrammatically shows a side view of the gear in part section, and
Figures 2 to 7 sequentially and diagrammatically illustrate stages in manufacture of the gear in a production assembly line.

### DETAILED DESCRIPTION OF DRAWINGS

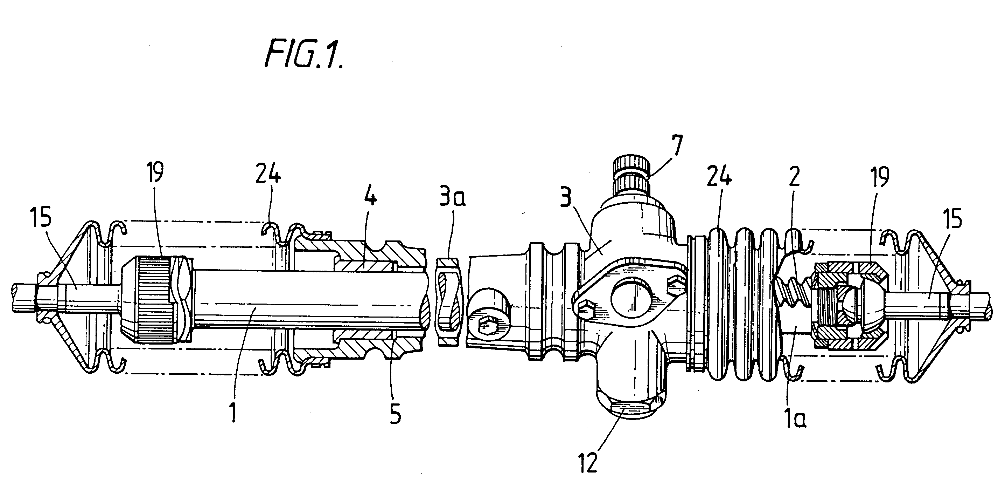

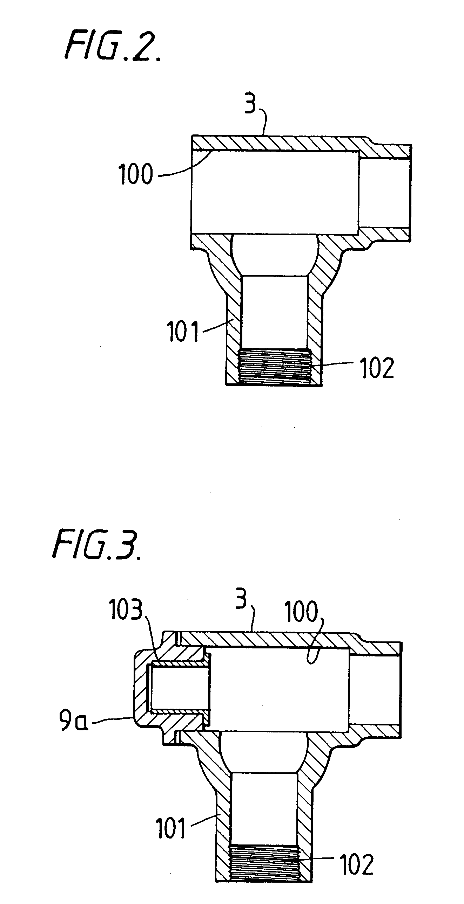

The rack and pinion steering gear shown in Figure 1 is typical of a conventional manual gear and the components will readily be apparent to persons skilled in the art. Basically these components comprise a housing 3 within which is rotatably mounted a pinion 6 having a shaft 7 which is intended to be rotated in response to a steering manoeuvre. The teeth 8 of the pinion engage with the teeth 2 of a rack bar 1 which extends longitudinally through the housing 2 so that rotation of the pinion effects in longitudinal displacement of the rack bar. The ends of the rack bar are coupled through universal joints 19 to tie rods 15 for connection to a steering linkage of a vehicle is known manner. A typical production line for the gear shown in Figure 1 has assembly stages shown sequentially in Figures 2 to 5. Figure 2 shows a lateral section through the housing 3 which has a stepped bore pinion housing part 100 and a cylindrical yoke housing part 101 which communicates with the pinion housing part and has an internal screw thread 102 at its end remote therefrom.

In Figure 3 a pinion end bearing 103 and end cap 9a is fitted in the larger diameter open end of the pinion housing part 100.

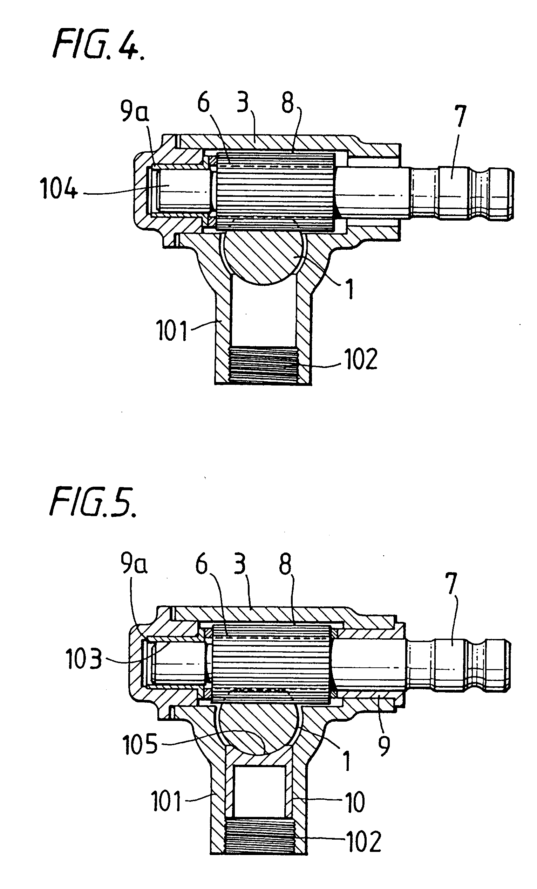

In Figure 4 the pinion 6 with its shaft 7 is located within the pinion housing part 100 so that a stub shaft 104 of the pinion is received in the bearing 103. The generally cylindrical rack bar 1 is located to extend through the housing 3 with its teeth 2 engaging with the pinion teeth 8.

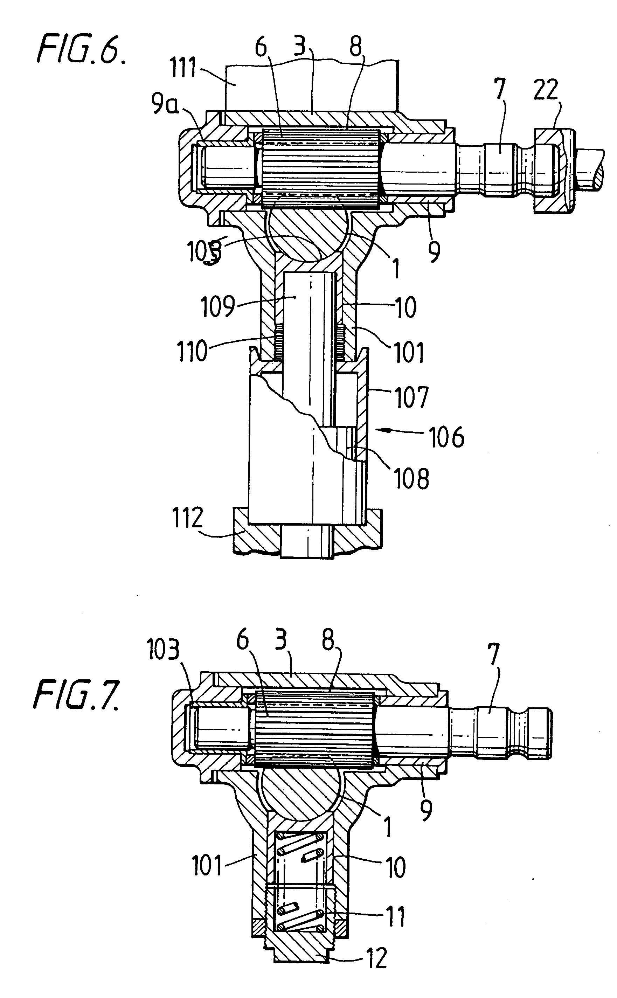

In Figure 5 a pinion shaft seal and end plug 9 are inserted to rotatably support the pinion shaft 7 in the housing 3. At this stage of assembly a rack bar bearing bush 4 (Figure 1) is passed over the rack bar to be received in a complementary seating 5 of a tubular extension 3a of the housing 3. A yoke member 10 is now positioned into the yoke housing part 101. The yoke member 10 has a saddle surface 105 which is part cylindrical to be complementary to the cylindrical profile of the rack bar 1 which is seated in the saddle surface 105. The yoke member 10 is usually cylindrical to be a close sliding fit within the cylindrical bore 110 of the yoke housing part 101. The saddle surface 105 engages the rack bar on the side thereof remote from the position of engagement between rack teeth 2 and the pinion teeth 8. Usually the yoke member 10 is positioned directly opposite to the aforementioned position of engagement between the rack and pinion teeth.

In a conventional rack and pinion steering gear production line a yoke spring 11 would now be mounted within the housing part 101 to engage the yoke member 10 as shown in Figure 7. The spring 11 is retained in the housing part by a plug 12 which screw threadedly engages the internal thread 102 of the yoke housing part. By adjustment of the plug 12 in the housing, the biasing force or load applied by the spring 11 reacting between the plug 12 and the yoke member 10 can be adjusted to provide a practical biasing force on the yoke member; this practical biasing force both supports the rack bar 1 and urges the teeth of the rack bar into engagement with the teeth of the pinion. Following adjustment of the load provided by the spring 11, the other components of the gear will be added such as the tie rods 15, bellows 24 and the like as are well known in the art to complete the assembly of the steering gear. The gear would then have been considered appropriate for installation in a vehicle following recognised finishing and testing operations. However, by the present invention, the production of the steering gear undergoes an additional stage which will now be described with reference to Figure 6.

The aforementioned additional stage immediately follows the stage previously discussed with reference to Figure 5. In Figure 6 the housing 3 is held firmly by a support 111 in the assembly line and a thrust unit 106 in the form of any hydraulic ram having a cylinder 107, piston 108 and piston rod 109 is brought into engagement with the housing assembly. More particularly, the thrust unit 106 is displaced on a support 112 so that the piston rod 109 enters the bore 110 of the housing part 101 and engages with the yoke member 10. The ram 106 is now pressurised to apply a load on the piston and its rod 109 in a sense to urge the yoke member 10 into engagement with the rack bar 1. The load from the ram reacts between the supports 111 and 112 and applies a running-in biasing force to the yoke member 10 which is considerably greater than the practical biasing force which will subsequently be provided by the biasing spring 11 as previously discussed with reference to Figure 7. During the application of the running-in biasing force from the ram 106, the pinion shaft 7 is engaged by a clutch 22. The pinion 6 is rotationally oscillated by the clutch 22 to reciprocate the rack bar 1 longitudinally within the housing 3 over a predetermined length of the rack bar (for example a length corresponding to displacement of the rack bar from one full lock to the opposite full lock of the steering gear). This displacement of the rack bar is maintained for a predetermined number of cycles or time. As a result of the heavy load applied by the ram 106 to the yoke member 10 during reciprocation of the rack bar, the saddle surface 105 rapidly wears or runs-in to the surface of the rack bar with which it engages, possibly to an extent comparable with several thousand miles of usage of a conventionally manufactured steering gear in a vehicle.

Following the aforementioned running-in of the yoke member and rack bar, the clutch 22 and ram 106 are disengaged from the pinion shaft and housing and the gear assembly is completed as previously discussed with reference to Figure 7 so that the practical biasing is applied to the yoke member 10 by the spring 11.

## Claims

1. A method of manufacturing a rack and pinion steering gear which comprises rotatably mounting a pinion (6) in a housing (3) with teeth (8) of the pinion (6) in engagement with teeth (2) of the rack bar (1) so that rotation of the pinion (6) effects in longitudinal displacement of the rack bar (1) in the housing (3); locating in the housing (3) yoke means (10) which is to be biased into engagement with the rack bar (1) on the side thereof remote from the position of engagement of the rack and pinion teeth (2, 8); temporarily introducing to the yoke means thrust means (106) which reacts on the yoke means (10) to urge the yoke means (10) into engagement with the rack bar (1) and thereby the rack bar teeth (2) into engagement with the pinion teeth (8); applying to the yoke means (10) by the thrust means (106) a running-in biasing force greater than a practical biasing force required on the yoke means (10) during use of the gear in a vehicle; reciprocating the rack bar (1) longitudinally in the housing (3) while the said biasing force is applied from the thrust means (106) to run-in a seating (105) between the yoke means (10) and the rack bar (1); removing the thrust means (106) from the yoke means (10) and providing a biasing means (11) in the gear which reacts on the yoke means (10) and applies thereto the practical biasing force.

2. A method as claimed in claim 1 in which the thrust means (106) comprises a fluid pressure operated ram (107, 108) or a jack device driven by an electric motor.

3. A method as claimed in either claim 1 or claim 2 which comprises inserting a spigot (109) of the thrust means (106) into the housing (3) for said spigot (109) to engage the yoke means (10) and applying the running-in biasing force from the spigot (109) to the yoke means (10).

4. A method as claimed in any one of the preceding claims which comprises rotating the pinion (6) to longitudinally reciprocate the rack bar (1) during the application of the running-in biasing force.

5. A method as claimed in claim 4 which comprises engaging the pinion (6) by clutch means (22) and rotating the pinion (6) with said clutch means (22).

6. Apparatus for manufacturing a rack and pinion steering gear in which a pinion (6) is rotatably mounted in a housing 3 with teeth (8) of the pinion (6) in engagement with teeth (2) of a rack bar (1) so that rotation of the pinion (6) effects in longitudinal displacement of the rack bar (1) in the housing (3) and yoke means (10) located in the housing (3) in sliding engagement with the rack bar (1) on the side of the rack bar (1) remote from the position of engagement of the rack and pinion teeth (2, 8) and which yoke means (10) is to be urged into engagement with the rack bar with a practical biasing force in the manufactured gear, said apparatus comprising first support means (111) for holding the housing (3); thrust means (106 for temporary introduction to the yoke means (10) and second support means (112) for the thrust means, said thrust means (106) being actuable to apply temporarily to the yoke means (10) a running-in biasing force which is greater than said practical biasing force and reacts on the yoke means (10) to urge the yoke means into engagement with the rack bar (1) and thereby the rack bar teeth (2) into engagement with the pinion teeth (8), and means (22) for longitudinally reciprocating the rack bar (1) in the housing (3) simultaneously with the application of said running-in biasing force to run-in a seating (105) between the yoke means (10) and the rack bar (1).

7. Apparatus as claimed in claim 6 in which the means for longitudinally reciprocating the rack bar (1) comprises a clutch (22) for engagement with the pinion (6) and by which the pinion (6) is rotated to effect said reciprocation of the rack bar.

8. Apparatus as claimed in either claim 6 or claim 7 in which the running-in biasing force applied to the yoke means (10) reacts between the first support means (111) and the second support means (112).

9. Apparatus as claimed in any one of claims 6 to 8 in which the first and second support means (111, 112) are displaceable relative to each other for introducing the thrust means (106) into engagement with the yoke means (10).

10. Apparatus as claimed in any one of claims 6 to 9 in which the thrust means (106) comprises a spigot (109) which is insertable into the housing (3) for engagement with the yoke means (10) and through which spigot (109) the running-in biasing force is applied to the yoke means (10).

11. Apparatus as claimed in any one of claims 6 to 10 in which the thrust means (106) comprises a fluid pressure operated ram (107, 108) or a jack device driven by an electric motor.

## Patentansprüche

1. Verfahren zur Herstellung eines Zahnstangenlenkgetriebes, das beinhaltet: die drehbare Lagerung eines Ritzels (6) in einem Gehäuse (3), wobei sich Zähne (8) in Eingriff mit Zähnen (2) der Zahnstange (1) befinden, so daß sich eine Drehung des Ritzels (6) in einer Längsverschiebung der Zahnstange (1) in dem Gehäuse (3) auswirkt; die Anordnung einer Jocheinrichtung (10) in dem Gehäuse (3), die in Eingriff mit der Zahnstange (1) an der Seite vorgespannt werden soll, die von der Eingriffsposition der Zahnstangen-/Ritzelverzahnung (2, 8) entfernt ist; das zeitweilige Einführen einer Druckeinrichtung (106) an die Jocheinrichtung, die auf die Jocheinrichtung (10) reagiert, um diese in Eingriff mit der Zahnstange (1) und dadurch die Zähne (2) der Zahnstange in Eingriff mit den Zähnen (8) des Ritzels zu bringen; das Aufbringen einer Einlaufvorspannkraft auf die Jocheinrichtung (10) durch die Druckeinrichtung (106), die größer als eine praktische Vorspannkraft auf die Jocheinrichtung (10) ist, die bei der Verwendung des Getriebes in einem Fahrzeug erforderlich ist; das Hin- und Herbewegen der Zahnstange (1) in dem Gehäuse (3) in Längsrichtung, während die Vorspannkraft von der Druckeinrichtung (106) aufgebracht wird, um eine Sitzfläche (105) zwischen der Jocheinrichtung (10) und der Zahnstange (1) einzulaufen; das Entfernen der Druckeinrichtung (106) von der Jocheinrichtung (10) und das Vorsehen einer Vorspanneinrichtung in dem Getriebe, die auf die Jocheinrichtung (10) reagiert und darauf die praktische Vorspannkraft aufbringt.

2. Verfahren nach Anspruch 1, bei dem die Druckeinrichtung (106) einen fluiddruckbetriebenen Stößel (107, 108) oder eine Hebeeinrichtung aufweist, die von einem Elektromotor angetrieben ist.

3. Verfahren nach Anspruch 1 oder Anspruch 2, das das Einfügen eine Zapfens (109) der Druckeinrichtung (106) in das Gehäuse (3) beinhaltet, damit der Zapfen (109) an der Jocheinrichtung (10) eingreift, sowie das Aufbringen der Einlaufvorspannkraft von dem Zapfen (109) zu der Jocheinrichtung (10).

4. Verfahren nach einem der vorhergehenden Ansprüche, das das Drehen des Ritzels (6) umfaßt, um die Zahnstange (1) während des Aufbringens der Einlaufvorspannkraft hin- und herzubewegen.

5. Verfahren nach Anspruch 4, das das Eingreifen an dem Ritzel (6) durch eine Kupplungseinrichtung (22) sowie die Drehung des Ritzels (6) mit der Kupplungseinrichtung (22) beinhaltet.

6. Vorrichtung zur Herstellung eines Zahnstangenlenkgetriebes, bei welcher ein Ritzel (6) in einem Gehäuse (3) drehbar gelagert ist, wobei sich Zähne (8) des Ritzels (6) in Eingriff mit Zähnen (2) der Zahnstange (1) befinden, so daß sich eine Drehung des Ritzels (6) in einer Längsverschiebung der Zahnstange (1) in dem Gehäuse (3) auswirkt, sowie eine Jocheinrichtung (10), die sich in dem Gehäuse (3) in gleitendem Eingriff mit der Zahnstange (1) an der Seite der Zahnstange (1) befinden, die von der Eingriffsstelle der Zahnstangen-/und Ritzelverzahnung (2, 8) entfernt ist, und wobei die Jocheinrichtung (10) in dem fertigen Getriebe mit der Zahnstange mit einer praktischen Vorspannkraft in Eingriff gedrückt werden soll; wobei die Vorrichtung eine erste Stützeinrichtung (111) zum Halten des Gehäuses (3) aufweist, eine Druckeinrichtung (106) zur zeitweiligen Einführung an der Jocheinrichtung (10) sowie eine zweite Stützeinrichtung (112) für die Druckeinrichtung, wobei die Druckeinrichtung (106) so zu betätigen ist, daß sie zeitweilig auf die Jocheinrichtung (10) eine Einlaufvorspannkraft aufbringt, die höher als die praktische Vorspannkraft ist, und auf die Jocheinrichtung (10) reagiert, um diese in Eingriff mit der Zahnstange (1) und dadurch die Zähne (2) der Zahnstange in Eingriff mit den Zähnen (8) des Ritzels zu drücken, sowie eine Einrichtung (22) zur Hin- und Herbewegung der Zahnstange (1) in dem Gehäuse (3) gleichzeitig mit dem Aufbringen der Einlaufvorspannkraft, um eine Sitzfläche (105) zwischen der Jocheinrichtung (10) und der Zahnstange (1) einzulaufen.

7. Vorrichtung nach Anspruch 6, in der die Einrichtung zur Hin- und Herbewegung der Zahnstange (1) in Längsrichtung eine Kupplung (22) zum Eingriff mit dem Ritzel (6) aufweist, durch die das Ritzel (6) gedreht wird, um die Hin- und Herbewegung der Zahnstange zu bewirken.

8. Vorrichtung nach Anspruch 6 oder 7, in der die auf die Jocheinrichtung (10) aufgebrachte Einlaufvorspannkraft zwischen der ersten Stützeinrichtung (111) und der zweiten Stützeinrichtung (112) reagiert.

9. Vorrichtung nach einem der Ansprüche 6 bis 8, in der die erste und die zweite Stützeinrichtung (111, 112) relativ zueinander verschiebbar sind, um die Druckeinrichtung (106) in Eingriff mit der Jocheinrichtung (10) einzuführen.

10. Vorrichtung nach einem der Ansprüche 6 bis 9, in der die Druckeinrichtung (106) einen Zapfen (109) aufweist, der zum Eingriff mit der Jocheinrichtung (10) in das Gehäuse (3) einfügbar ist und über welchen die Einlaufvorspannkraft auf die Jocheinrichtung (10) aufgebracht wird.

11. Vorrichtung nach einem der Ansprüche 6 bis 10, in der die Druckeinrichtung (106) einen fluiddruckbetriebenen Stößel (107, 108) oder eine Hebevorrichtung aufweist, die durch einen Elektromotor angetrieben ist.

## Revendications

1. Procédé de fabrication d'un mécanisme de direction à crémaillère et pignon, qui consiste à monter en rotation un pignon (6) dans un boîtier (3) de façon que les dents (8) du pignon (6) engrènent avec les dents (2) de la barre à crémaillère (1) afin qu'une rotation du pignon (6) provoque un déplacement longitudinal de la barre à crémaillère (1) dans le boîtier (3) ; à placer dans le boîtier (3) un moyen à étrier (10) qui est destiné à être rappelé en contact avec la barre à crémaillère (1) sur son côté éloigné de la position d'engrènement des dents (2, 8) de la crémaillère et du pignon ; à introduire temporairement au moyen à étrier un moyen de poussée (106) qui réagit sur le moyen à étrier (10) afin de repousser le moyen à étrier (10) en contact avec la barre à crémaillère (1) et ainsi les dents (2) de la barre à crémaillère en prise avec les dents (8) du pignon : à appliquer au moyen à étrier (10), à l'aide du moyen de poussée (106), une force de rappel de rodage plus grande qu'une force de rappel effective en pratique demandée sur le moyen à étrier (10) pendant l'utilisation du mécanisme dans un véhicule : à faire exécuter à la barre à crémaillère (1) un mouvement alternatif longitudinalement dans le boîtier (3) tandis que ladite force de rappel est appliquée par le moyen de poussée (106) pour former par rodage une portée (105) entre le moyen à étrier (10) et la barre à crémaillère (1) ; à retirer le moyen de poussée (106) du moyen à étrier (10) et à mettre en place un moyen de rappel (11) dans le mécanisme, lequel réagit sur le moyen à étrier (10) et lui applique la force de rappel effective en pratique.

2. Procédé selon la revendication 1, dans lequel le moyen de poussée (106) comprend un vérin (107, 108) actionné par la pression d'un fluide, ou un dispositif de levage entraîné par un moteur électrique.

3. Procédé selon la revendication 1 ou la revendication 2, qui consiste à insérer un bout mâle (109) du moyen de poussée (106) dans le boîtier (3) afin que ledit bout mâle (109) engage le moyen à étrier (10), et à appliquer la force de rappel de rodage à partir du bout mâle (109) au moyen à étrier (10).

4. Procédé selon l'une quelconque des revendications précédentes, qui consiste à faire tourner le pignon (6) pour faire exécuter un mouvement alternatif longitudinal à la barre à crémaillère (1) pendant l'application de la force de rappel de rodage.

5. Procédé selon la revendication 4, qui consiste à engager le pignon (6) par un moyen d'accouplement (22) et à faire tourner le pignon (6) avec ledit moyen d'accouplement (22).

6. Appareil de fabrication d'un mécanisme de direction à crémaillère et pignon dans lequel un pignon (6) est monté de façon à pouvoir tourner dans un boîtier (3) afin que les dents (8) du pignon (6) soient en prise avec les dents (2) d'une barre à crémaillère (1) pour qu'une rotation du pignon (6) provoque un déplacement longitudinal de la barre à crémaillère (1) dans le boîtier (3), et un moyen à étrier (10) placé dans le boitier (3) en contact de glissement avec la barre à crémaillère (1) sur le côté de la barre à crémaillère (1) éloigné de la position d'engrènement des dents (2, 8) de la crémaillère et du pignon, lequel moyen à étrier (10) est destiné à être rappelé en contact avec la barre à crémaillère sous une force de rappel effective en pratique dans le mécanisme fabriqué, ledit appareil comportant un premier moyen de support (111) destiné à maintenir le boîtier (3) ; un moyen de poussée (106) destiné à être introduit temporairement au moyen à étrier (10) et un second moyen de support (112) pour le moyen de poussée, ledit moyen de poussée (106) pouvant être actionné pour appliquer temporairement au moyen à étrier (10) une force de rappel de rodage qui est plus grande que ladite force de rappel effective en pratique et qui réagit sur le moyen à étrier (10) afin de repousser le moyen à étrier en engagement avec la barre à crémaillère (1) et ainsi les dents (2) de la barre à crémaillère en prise avec les dents (8) du pignon, et un moyen (22) destiné à faire exécuter un mouvement alternatif longitudinal à la barre à crémaillère (1) dans le boîtier (3) en même temps que l'application de ladite force de rappel de rodage pour établir par rodage une portée (105) entre le moyen à étrier (10) et la barre à crémaillère (1).

7. Appareil selon la revendication 6, dans lequel le moyen destiné à faire exécuter un mouvement alternatif longitudinal à la barre à crémaillère (1) comprend un accouplement (22) destiné à engager le pignon (6) et par lequel le pignon (6) est mis en rotation pour effectuer ledit mouvement alternatif de la barre à crémaillère.

8. Appareil selon la revendication 6 ou la revendication 7, dans lequel la force de rappel de rodage appliquée au moyen à étrier (10) réagit entre le premier moyen de support (111) et le second moyen de support (112).

9. Appareil selon l'une quelconque des revendications 6 à 8, dans lequel les premier et second moyens de support (111, 112) peuvent être déplacés l'un par rapport à l'autre pour introduire le moyen de poussée (106) jusqu'en engagement avec le moyen à étrier (10).

10. Appareil selon l'une quelconque des revendications 6 à 9, dans lequel le moyen de poussée (106) comprend un bout mâle (109) qui peut être inséré dans le boîtier (3) pour être engagé avec le moyen à étrier (10), bout mâle (109) par l'intermédiaire duquel la force de rappel de rodage est appliquée au moyen à étrier (10).

11. Appareil selon l'une quelconque des revendications 6 à 10, dans lequel le moyen de poussée (106) comprend un vérin (107, 108) actionné par la pression d'un fluide ou un dispositif de levage entraîné par un moteur électrique.
